# EUROPÄISCHE PATENTANMELDUNG

(11) **EP 4 324 540 A1**
(43) Veröffentlichungstag der Anmeldung: **21.02.2024**
(21) Anmeldenummer: 23191312.0
(22) Anmeldetag: 17.05.2019
(51) Int. Cl.: B01D 21/34, B01D 21/00, B01D 21/02, B01D 21/24, B01D 21/26, B01D 21/32

(54) **SEKUNDÄRABSCHEIDER ZUR AUFREINIGUNG EINES MIT PARTIKELN EINER ERHITZTEN ERDÖLFRAKTION VERUNREINIGTEN KÜHLMITTELS, WIE BEISPIELSWEISE QUENCHFLUID**

(62) Teilanmeldung aus: 19726353.6
(71) Anmelder: Möckel, Klaus, 42653 Solingen (DE)
(72) Erfinder: Möckel, Klaus, 42653 Solingen (DE)
(74) Vertreter: Ostriga Sonnet Wirths & Vorwerk

(57) **Zusammenfassung**

Beschrieben und dargestellt wird ein Sekundärabscheider zur Aufreinigung eines mit Partikeln einer erhitzten Erdölfraktion verunreinigten Kühlmittels, wie beispielsweise Quenchfluid, mit einem kreiszylindrischen Grundkörper, welcher oberseitig geschlossen ist und nach unten in einem konischen Endbereich ausläuft, wobei der konische Endbereich eine verschließbare Entnahmeöffnung aufweist und der Grundkörper einen zylindrischen Rotationshohlraum umgibt, mit einem Einlassstutzen, welcher am Grundkörper angeordnet ist, um verunreinigtes Kühlmittel in den Rotationshohlraum einzuleiten, mit einem Auslassstutzen, welcher am Grundkörper angeordnet ist, um das gereinigte Kühlmittel abzuleiten, wobei der Austrittbereich des Einlassstutzens das verunreinigte Kühlmittel tangential an die Innenwand des Grundkörpers führt, um den Volumenstrom des verunreinigten Kühlmittels in eine kreisbogenförmige Bewegungsbahn radial einer Innenumfangsfläche des kreiszylindrischen Grundkörpers zu lenken, wobei der Sekundärabscheider oberseitig mittels eines Deckels verschlossen ist, wobei diesem zentral der Auslassstutzen angeordnet ist, um das gereinigte Kühlmittel aus dem Sekundärabscheider zu entlassen, ein Ablaufstutzen im Bodenbereich des Sekundärabscheiders ausgebildet ist, um die Viskosität zu beeinflussen, sodass insbesondere die Sedimentation aufrechterhalten wird, wobei an der Innenseite des Deckels eine Rückführeinheit angeordnet ist, um im Zusammenwirken mit dem Ablaufstutzen, die Viskosität zu beeinflussen und den Filter von den angeschwemmten Partikeln zu befreien, sodass insbesondere die Sedimentation aufrechterhalten wird.

## Beschreibung

Sekundärabscheider zur Aufreinigung eines mit Partikeln einer erhitzten Erdölfraktion verunreinigten Kühlmittels, wie beispielsweise Quenchfluid.

Die Erfindung betrifft ein Sekundärabscheider zur Aufreinigung eines mit Partikeln einer erhitzten Erdölfraktion verunreinigten Kühlmittels, wie beispielsweise Quenchfluid, mit den Merkmalen des Oberbegriffs.

Gattungsgemäße Sekundärabscheider zur Aufreinigung eines mit Partikeln einer erhitzten Erdölfraktion verunreinigten Kühlmittels sind im Stand der Technik, wie beispielsweise aus der CZ 2007 0404 A3, hinlänglich bekannt. Die erhitzen Partikel stammen aus einem sogenannten Pyrolyseprozess. Hierbei werden Fraktionen aus einer Erdölraffinerie, wie beispielsweise Naphtha zu chemischen Produkten, wie beispielweise Ethylen, verarbeitet. Die Erdölfraktion wird in Pyrolyseöfen stark erhitzt, um in kleine gasförmige Moleküle zur weiteren Verwertung aufgespalten zu werden. Bei dieser Aufspaltung entstehen neben den chemischen Produkten auch kohlenstoffhaltige Rückstände, wie beispielsweise Koks.

Um eine Folgereaktion dieser chemischen Produkte zu verhindern, diese mit einem speziellen Kühlmittel in einer Kühlstation abgekühlt werden. Bei diesem Kühlmittel handelt es sich um Quenchfluide, wie beispielsweise Quchenöl oder Quenchwasser.

Die abgekühlten chemischen Produkte werden zur Weiterverarbeitung in einen nicht weiter definierten Zyklus überführt. Das Kühlmittel bleibt mit Rückständen, also Partikeln der erhitzen Erdölfraktion, in der Kühlstation verunreinigt zurück. Zur Aufreinigung dieser verunreinigten Kühlmittel werden diese im gattungsgemäßen Verfahren zunächst in einen Primär-und nachfolgend in einen Sekundärabscheidern überführt und dort von den Partikeln einer erhitzen Erdölfraktion getrennt.

Für die Primärreinigung des mit Partikeln einer erhitzten Erdölfraktion verunreinigten Kühlmittels wird dieses zunächst in einen Primärabscheider eingeleitet. Dort wird mittels Zentrifugalkraft das verunreinigte Kühlmittel in eine Fraktion mit gereinigtem Kühlmittel und eine Fraktion mit verunreinigtem Kühlmittel aufgeteilt. Das verunreinigte Kühlmittel wird bodenseitig vom Primärabscheider kontinuierlich dem Sekundärabscheider zugeführt. Das gereinigte Kühlmittel wird dem Aufreinigungsprozess entzogen und zur weiteren Abkühlung der Erdölfraktionen in der Kühleinheit eingesetzt.

Problematisch an diesem Verfahrensschritt und an dem Primärabscheider ist, dass die Abscheideleistung des gereinigten Kühlmittels insgesamt unzufrieden stellend ausfällt und keine ausreichend effektive Auftrennung von Kühlmittel und Partikeln gewährleistet ist.

Zudem sind die gattungsgemäßen Primärabscheider mit Verschleißhemden ausgebildet. Diese Verschleißhemden sind allerdings nicht für den Betrieb im Unterdruck geeignet, welcher entsteht, sobald der Primärabscheider, in welchem sich noch erhitztes Kühlmittel befindet, vom Aufreinigungsprozess isoliert wird und das verunreinigte Kühlmittel abkühlt.

Problematisch ist auch, dass am Außenmantel des Primärabscheiders ein Druckmessgerät über einen Stutzen angeschlossen sein muss, welcher den Druck zwischen Außenmantel und Verschleißhemd misst. Sobald der Druck im Druckmessgerät steigt, ist dies der Hinweis für den Anlagenbetreiber, dass das Verschleißhemd undicht ist und ausgetauscht werden muss. Die Verschleißhemden müssen oft ausgetauscht werden und ziehen somit einen hohen Kostenaufwand nach sich.

Des Weiteren ist es nachteilig, dass der Druckverlust im Hydrozyklon derart hoch ist, dass die vorgeschalteten Pumpen, um den Druck im Hydorzyklon gleichmäßig aufrechtzuerhalten, derart verschleißen, dass diese oft gewartet oder ausgetauscht werden müssen. Hierdurch entsteht ein enormer Kostenaufwand. Zudem ist es unvorteilhaft, dass immer eine zusätzliche Ersatzpumpe bereitstehen muss, um einen Stillstand des Primärabscheiders zu vermeiden.

Das Kühlmittel, welches im Primärabscheider nicht aufgereinigt worden ist, wird vom Primärabscheider in den Sekundärabscheider überführt. Im Sekundärabscheider gemäß Stand der Technik wird anhand eines Filtrationssystems das verunreinigte Kühlmittel von den erhitzen Erdölfraktion Partikeln getrennt. Das dort aufgereinigte Kühlmittel wird in die Kühleinheit zurückgeführt und wird dem Kühlkreislauf wieder zugeführt. Die filtrierten Partikel sammeln sich bodenseitig des Sekundärabscheiders. Der Filter wird vom Prozessstrom isoliert, sodass eine Wartungssäuberung nachgeschaltet werden kann. Anschließend werden die Partikel aus einer Bodenöffnung des Filters aus dem Sekundärabscheider entfernt. Nachdem die Bodenöffnung wieder verschlossen worden ist, kann weiteres verunreinigtes Kühlmittel aufgereinigt werden.

Besonders nachteilig an dieser gattungsgemäßen Sekundärreinigung mit Sekundärabscheider ist, dass die Aufreinigung mittels eines Filtersystems wie beispielsweise aneinander gereihte Siebkorbfilter, erfolgt. Im Filtersystem lagern sich oft die im verunreinigten Kühlmittel befindlichen Partikel ab, sodass die Aufreinigung ineffizient ist und die Filter oft gereinigt oder gar ausgetauscht werden müssen.

Aufgabe ist es deshalb, gattungsgemäße Sekundärabscheider derart zu verbessern, dass eine effektive und kontinuierliche Aufreinigung des verunreinigten Kühlmittels gewährleistet ist.

Die Aufgabe der Erfindung wird gelöst durch einen Sekundärabscheider mit den Merkmalen des Anspruchs 1, insbesondere dessen kennzeichnenden Merkmalen, wonach an der Innenseite des Deckels eine Rückführeinheit angeordnet ist, um im Zusammenwirken mit dem Ablaufstutzen, die Viskosität zu beeinflussen und den Filter von den angeschwemmten Partikeln zu befreien, sodass insbesondere die Sedimentation aufrechterhalten wird.

Wird mittels Rückführeinheit entweder aufgereinigtes Kühlmittel oder sonstiges prozessgeeignetes Fluid in den Sekundärabscheider eingefüllt, um die Viskosität des verunreinigten Kühlmittels herunterzusetzen. Allerdings muss das zusätzlich eingefüllte Kühlmittel bzw. prozessgeeignetes Fluid aus dem Sekundärabscheider abgelassen werden. Dazu wird das Kühlmittel bzw. das Fluid über den Ablaufstutzen aus dem Sekundärabscheider entfernt.

Vorteilhaft an der Erfindung ist zudem, dass das verunreinigte Kühlmittel tangential an die Innenwand des Grundkörpers geführt wird, um den Volumenstrom entlang der Innenumfangsfläche zu führen. Das in der kreisbahnbewegte verunreinigte Kühlmittel kann nun aufgrund von Sedimentation voneinander getrennt werden. Die Partikel einer größeren Dichte werden von den dem Kühlmittel derart abgetrennt, dass diese auf den Boden des Sekundärabscheiders sinken und dort verbleiben. Das somit verbleibende gereinigte Kühlmittel weist eine geringere Dichte auf und wird entgegen der Sedimentationsrichtung aus dem Sekundärabscheider entfernt.

Ein weiterer Vorteil des Sekundärabscheiders liegt darin, dass im Sekundärabscheider mittels Sedimentation eine erste Fraktion mit Partikeln einer erhitzten Erdölfraktion und eine zweite Fraktion mit gereinigtem Kühlmittel entsteht, wobei zwischen der ersten und der zweiten Fraktion eine Trennschicht mit verunreinigtem Kühlmittel verbleibt. Das neu eingefüllte verunreinigte Kühlmittel wird somit lediglich der Trennschicht mit verunreinigtem Kühlmittel zugeführt. Die bereits aufgetrennten Fraktionen werden dabei nicht wieder mit der Trennschicht vermischt, da diese unberührt bleiben.

Ein besonderer Vorteil ist darüber hinaus, dass ein Filter quer zur Längsachse des Grundkörpers im Rotationshohlraum einsitzt, um lediglich in einer intervallweise durchgeführten Wartungssäuberung als Partikelbarriere zu dienen. Aufgrund der vorhergehend beschriebenen Sedimentation, wird im Sekundärabscheider kein Filter zur Aufreinigung des verunreinigten Kühlmittels benötigt. Der im Rotationshohlraum einsitzende Filter dient hierbei lediglich dazu, dass während der Wartungssäuberung des Sekundärabscheiders keine Partikel, welche beispielsweise noch als Rückstände am Bodenbereich des Sekundärabscheider verblieben sind in den Auslassstutzen gelangen. Zudem wird somit auch verhindert, dass gegebenenfalls gereinigtes Kühlmittel im Nachgang wieder verunreinigt wird.

Es ist zudem vorgesehen, dass im Rotationshohlraum ein Abscheideblech einsitzt, um beim Einfüllen des verunreinigten Kühlmittels eine Vermischung der im Sekundärabscheider bereits vorhandenen zweiten Fraktion und der Trennschicht zu verhindern. Die zweite Fraktion, welche das gereinigte Kühlmittel enthält, soll nicht durch Einführen von neuem verunreinigtem Kühlmittel wiederum selbst verunreinigt werden. Verwirbelungen und Querströme werden somit bereits beim Einfüllen des neuen verunreinigten Kühlmittels verhindert. Das neueingefüllte, verunreinigte Kühlmittel trifft beim Einfüllen lediglich gegen das Abscheideblech, sodass eine Vermischung zwischen Trennschicht und zweiter Fraktion verhindert wird.

Besonders vorteilhaft ist, dass das Abscheideblech ringförmig ausgebildet ist. Zudem ist daran gedacht, dass das Abscheideblech zwischen dem Filter und dem Einfüllstutzen angeordnet ist, sodass das neueingefüllte, verunreinigte Kühlmittel lediglich gegen das Abscheideblech gespült werden kann. Eine Vermischung mit dem bereits aufgereinigten Kühlmittel wird somit verhindert.

Es ist weiterhin daran gedacht, dass der Sekundärabscheider oberseitig mittels eines Deckels verschlossen ist, wobei diesem zentral der Auslassstutzen angeordnet ist, um das gereinigte Kühlmittel aus dem Sekundärabscheider zu entlassen.

Zudem ist besonders vorteilhaft, dass ein Ablaufstutzen im Bodenbereich des Sekundärabscheiders ausgebildet ist, um die Viskosität zu beeinflussen und den Filter von den angeschwemmten Partikeln zu befreien, sodass insbesondere die Sedimentation aufrecht erhalten wird. Sollte das verunreinigte Kühlmittel eine derart hohe Viskosität aufweisen, dass die Sinkgeschwindigkeit der Partikel der Strömungsgeschwindigkeit des gereinigten Kühlmittels entspricht, wird die Sedimentation unterbrochen. Eine Aufreinigung ist dann nicht mehr zufriedenstellend möglich. Durch das Ablassen des Kühlmittels über den Ablaufstutzen entsteht eine entgegen gerichtete Strömung, im Sekundärabscheider, welcher dazu dient, die angeschwemmten Partikel vom Filter zu lösen und die Partikel zu entfernen.

Es ist zudem daran gedacht, dass an der Entnahmeöffnung ein Siebkorb angeordnet ist, welcher verfahrbar ausgestaltet ist, um die bodenseitig angelagerten Partikel aus dem Sekundärabscheider zu entfernen. Es wird hierdurch gewährleistet, dass die Partikel jederzeit mittels der Entnahmeöffnung aus dem Sekundärabscheider entfernt werden können.

Weiterhin ist es vorgesehen, dass an einer vertikalen Mantelfläche des Grundkörpers ein Sensor und an der gegenüberliegenden Mantelfläche des Grundkörpers eine Detektoreinheit angeordnet ist, um wenigstens eine Füllstandshöhe der sedimentierten Partikel innerhalb des Grundkörpers radiometrisch zu messen. Der Anlagenbetreiber kann somit zu jedem Zeitpunkt feststellen, wie hoch der Füllstand der bereits sedimentierten Partikel im Sekundärabscheider ist und gegebenenfalls die Partikel aus dem Sekundärabscheider entfernen.

Hier ist es auch möglich, dass beispielsweise bei Erreichen einer vordefinierten Füllstandshöhe ein Füllstandsalarm ausgelöst wird. Es ist auch möglich, dass mehrere Füllstandsalarme ausgelöst werden, sodass der Betreiber der Anlage schätzen kann, wann der nächste Wartungsprozess gestartet werden muss. Oft sind erst Reinigungsprozesse nach fünf bis sechs Wochen notwendig.

Es kann zudem vorgesehen sein, dass im konischen Endbereich des Sekundärabscheiders ein Tauchrohr einsitzt, in welchem ein Sensor zur radiometrischen Messung der Füllstandshöhe der sedimentierten Partikel angeordnet ist.

Vorteilhaft ist, dass verunreinigtes Kühlmittel mittels eines Ablaufstutzens aus dem Sekundärabscheider abgeleitet werden kann, um die Viskosität zu beeinflussen und den Filter von angeschwemmten Partikeln zu befreien, sodass insbesondere die Sedimentation aufrechterhalten wird. Sollte die Viskosität im Sekundärabscheider derart ansteigen, dass sich auch Partikel ≥ 0.5 mm an dem Filter absetzen, da deren Eigengewicht nicht ausreicht, um der entgegen gerichteten Strömungsgeschwindigkeit entgegenzuwirken, kann das Kühlmittel mittels des Ablaufstutzens entfernt werden. Hierbei entsteht eine entgegen gerichtete Strömung, sodass die Partikel vom Filter abgelöst werden.

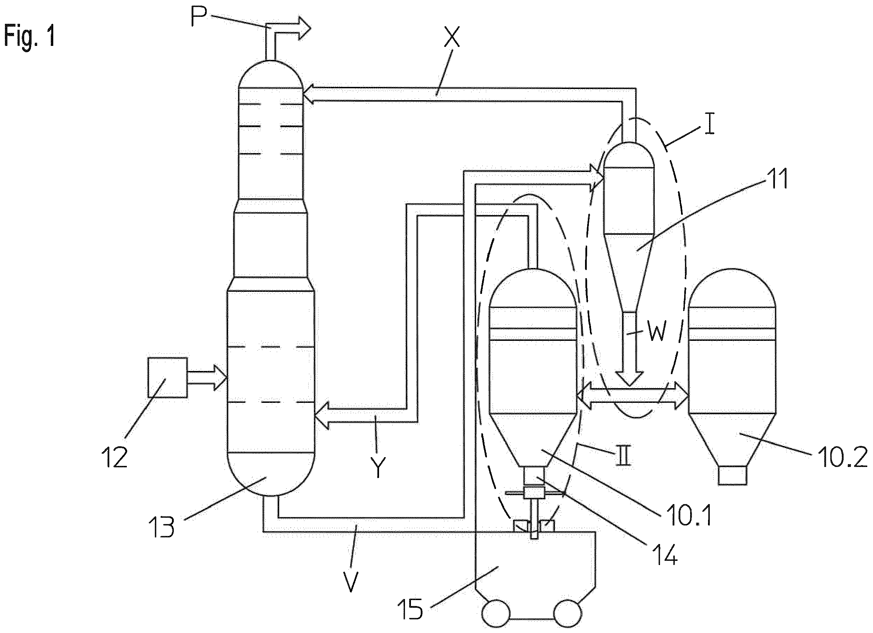

Sollte nun mittels Differenzdruckmessung innerhalb des Sekundärabscheiders festgestellt werden, dass eine zu hohe Viskosität im Sekundärabscheider vorherrschen, wird zunächst der Zulauf des verunreinigten Kühlmittels in den Sekundärabscheider als auch der Austritt des gereinigten Kühlmittels blockiert. Das hochviskose, verunreinigte Kühlmittel wird anschließend aus dem Ablaufstutzen ausgelassen und erst anschließenden weniger viskoses verunreinigtes Kühlmittel in den Sekundärabscheider wieder eingelassen. Ist nur ein Sekundärabscheider in Betrieb, sollte während des o.a. Vorganges ein weiterer Sekundärabscheider mit dem verunreinigten Kühlmittel beaufschlagt werden, wie beispielsweise anhand des Sekundärabscheiders (siehe Figur 1), damit ein kontinuierlicher Betrieb gewährleistet ist. Sind aber bereits mehrere Sekundärabscheider gleichzeitig in Betrieb, kann der o.a. Vorgang durchaus für wenige Minuten durchgeführt werden, ohne einen weiteren Sekundärabscheider mit dem verunreinigten Kühlmittel zu beaufschlagen.

Sollte die Druckdifferenz im Sekundärabscheider anhand des Verfahrensschrittes nicht wesentlich abgenommen haben und die Druckdifferenz innerhalb eines kurzen Zeitintervalls wieder ansteigen, ist es alternativ vorgesehen, dass zusätzliches gereinigtes Kühlmittel mittels einer Rückführeinheit in den Sekundärabscheider eingeleitet werden kann, wobei die Rückführeinheit mit dem Ablaufstutzen zusammenwirkt, um die Viskosität zu beeinflussen und den Filter von den angeschwemmten Partikeln zu befreien, sodass insbesondere die Sedimentation aufrechterhalten wird. Hierbei wird das hochviskose Kühlmittel derart verflüssigt, dass die Sinkgeschwindigkeit der Partikel größer ist als die Strömungsgeschwindigkeit des gereinigten Kühlmittels. Dadurch, dass allerdings zusätzliche Flüssigkeit in den Sekundärabscheider eingelassen wird, muss die übermäßig eingefüllte Flüssigkeit mittels des Ablaufstutzens aus dem Sekundärabscheider abgeführt werden.

Ferner ist daran gedacht, dass in der Sekundärreinigung der Volumenstrom des verunreinigten Kühlmittels in eine kreisbogenförmige Bewegungsbahn radial einer Innenumfangsfläche des Sekundärabscheiders gelenkt wird. Aufgrund der radialen kreisbogenförmigen Bewegungsbahn des Kühlmittels wird dieses gleichmäßig entlang einer Innenumfangsfläche geführt, sodass die Partikel gleichmäßig vom Kühlmittel getrennt werden können.

Weiterhin ist es vorteilhaft, dass in der Sekundärreinigung die Partikel der erhitzten Erdölfraktion von dem verunreinigten Kühlmittel durch Sedimentation abgeschieden werden und somit eine Aufreinigung mittels Filter komplett ersetzt wird ohne die Aufreinigungsleistung des verunreinigten Kühlmittels zu reduzieren. Hierbei sedimentieren die Partikel einer bestimmten Partikelgröße, wie beispielsweise einer Partikelgröße von ≥ 0,5 mm aus dem verunreinigten Kühlmittel in Richtung Boden des Sekundärabscheiders. Das gereinigte Kühlmittel wird aus der Sekundärreinigung entfernt und dem Kühlkreislauf wieder zugeführt.

Es ist daran gedacht, dass eine entgegen der Sedimentationsrichtung gerichtete Strömungsgeschwindigkeit des gereinigten Kühlmittels geringer ist als die entgegengesetzte Sinkgeschwindigkeit der Partikel der erhitzten Erdölfraktion. Bei der Sedimentation trennen sich die Partikel aufgrund der höheren Dichte gegenüber der Dichte des Kühlmittels von diesem ab. Je größer die Dichte der Partikel, desto schneller sinken diese zu Boden. Das gereinigte Kühlmittel weist eine geringere Dichte gegenüber der Partikel auf. Partikel, die beispielsweise eine Partikelgröße Partikel ≤ 0,5 mm aufweisen, haben eine derart geringe Dichte, dass diese im gereinigten Kühlmittel verbleiben. Partikel dieser geringen Größe sind für den Kühlkreislauf nicht relevant, da durch die Strömungsgeschwindigkeit im angeschlossenen Kühlkreislauf die Partikel ≤ 0,5 mm in Bewegung sind und somit keine weiteren Probleme darstellen.

Dabei ist es bevorzugt, dass in der Sekundärreinigung durch die Sedimentation zwei Fraktionen entstehen, wobei die erste Fraktion, das Sediment, die Partikel der erhitzten Erdölfraktion und die zweite Fraktion das gereinigte Kühlmittel enthält, wobei zwischen der ersten und er zweiten Fraktion eine Trennschicht mit verunreinigtem Kühlmittel existiert.

Es ist vorgesehen, dass die erste Fraktion, welche die Partikel enthält, den Sekundärabscheider über eine bodenseitige Entnahmeöffnung des Sekundärabscheiders abgeleitet werden kann. Zudem ist es jederzeit möglich über einen Ablaufstutzen Flüssigkeit aus dem Sekundärabscheider abzulassen.

Die zweite Fraktion hingegen wird mittels eines am Sekundärabscheider angeordneten Auslassstutzen entfernt. Das gereinigte Kühlmittel, welches Partikel einer Partikelgröße ≤ 0,5 mm enthalten kann, wird in den Kühlkreislauf zum Abkühlen der Erdölfraktionen zurückgeführt.

Es ist zudem daran gedacht, dass der Volumenstrom des verunreinigten Kühlmittels in der Sekundärreinigung einem prozentualen Anteil des Volumenstroms des verunreinigten Kühlmittels in der Primärreinigung entspricht. Dabei ist es besonders vorteilhaft, dass der prozentuale Anteil des Volumenstroms des verunreinigten Kühlmittels in der Sekundärreinigung maximal 5%, bevorzugt 2%, des Volumenstroms in der Primärreinigung beträgt.

Bevorzugt ist zudem auch, dass mindestens eine Füllstandshöhe der sedimentierten Partikel im Sekundärabscheider mittels radiometrischer Messung diktiert wird. Dabei werden die Partikel, welche aufgrund der Sedimentation in Richtung des Bodenbereiches des Sekundärabscheiders sedimentieren, derart detektiert, dass bei Erreichen wenigstens einer vordefinierten Füllstandshöhe der sedimentierten Partikel im Sekundärabscheider wenigstens einen Füllstandshöhenalarm ausgelöst wird. Der Anlagenbetreiber kann nun abschätzen, wann der Bodenbereich mit Partikeln derart hoch gefüllt ist, dass die Partikel abgelassen werden müssen. Somit kann der Anlagenbetreiber bei Ertönen des Füllstandshöhenalarms die Wartungssäuberung bereits vorbereiten.

Es ist auch vorstellbar, dass mehrere vordefinierte Füllstandshöhen mittels radiometrischer Messungen detektiert werden und mehrere Füllstandsalarme ausgelöst werden können. Dem Analgenbetreiber eröffnen sich somit verschiedene Möglichkeiten, um die Füllstandshöhe der Partikel feststellen zu können. Auch die Anschlussprozesse, wie beispielsweise die Wartung, können nun besser geplant und vorbereitet werden.

Weiterhin ist vorgesehen, dass an einer bodenseitigen Entnahmeöffnung des Sekundärabscheiders ein verfahrbarer Siebkorb angeordnet ist, welcher von dem Sekundärabscheider beabstandet werden kann, um die sedimentierten Partikel in einen Behälter außerhalb des Sekundärabscheiders zu entlassen. Dabei ist es besonders vorteilhaft, dass der Anlagenbenutzer jederzeit den Siebkorb von der Entnahmeöffnung beabstanden kann, um die Partikel aus dem System zu entlassen.

Weitere Vorteile sowie ein besseres Verständnis der Erfindung folgt aus der nachfolgenden Beschreibung eines Ausführungsbeispiels. Es zeigen:
Figur 1: Ablaufdiagramm eines Aufreinigungsprozess eines verunreinigten Kühlmittels mittels eines Primär- und eines Sekundärabscheiders,
Figur 2: Seitenansicht eines Primärabscheiders in Form eines Hydrozyklons gemäß Position I im Ablaufdiagramm in Fig. 1,
Figur 3: Detaildarstellung eines Tauchrohres des Primärabscheiders gemäß Ausschnittskreis a in Fig. 2,
Figur 4: Seitenansicht eines Sekundärabscheiders mit angeordnetem externem Behälter gemäß Position II im Ablaufdiagramm in Fig. 1,
Figur 5a: Seitenansicht einer Entleerungshilfe und eines an einer Entnahmeöffnung des Sekundärabscheiders angelagerten Siebkorbs,
Figur 5b: Seitenansicht der am Siebkorb angeordneten Entleerungshilfe gemäß Ausschnittskreis b in Figur 4
Figur 5c: Seitenansicht der verfahrenen Entleerungshilfe mit angeordnetem, von der Entnahmeöffnung des Sekundärabscheiders beanstandetem Siebkorb.

In der Figur 1 ist der schematische Ablaufprozess der Aufreinigung eines verunreinigten Kühlmittels, wie beispielsweise Quenchöl oder Quenchwasser dargestellt. Dort ist zudem ein erfindungsgemäßer Sekundärabscheider dargestellt. Der in Betrieb befindliche Sekundärabscheider ist insgesamt mit der Bezugsziffer 10.1 versehen. Der in Aufbau und Funktion identische, zum Austausch bereitstehende Sekundärabscheider ist hingegen mit der Bezugsziffer 10.2 beschrieben. Zudem ist der Figur 1 ein Primärabscheider 11 in Form eines Hydrozyklons dargestellt.

In der Figur 1 wird in eine Kühleinheit 12 eine erhitzte Erdölfraktion eingeleitet, welche im vorhergehenden nicht dargestellten Pyrolyseofen erhitzt worden ist. Bei dieser Aufspaltung entstehen neben den chemischen Produkten auch kohlenstoffhaltige Partikel. Um Folgereaktionen, innerhalb der Erdölfraktionen zu vermeiden, wird in die Kühleinheit 12 ein Kühlmittel, wie beispielsweise Quenchöl oder Quenchwasser, eingespritzt und die Partikel werden im Kühlmittel aufgenommen. Das mit Partikeln einer erhitzen Erdölfraktion verunreinigte Kühlmittel wird in eine Kühlkolonne 13 überführt, aus welcher zunächst chemischen Produkte, welche fortgehend für die Petrochemie verwendet werden, entlassen werden. Diese Ableitung ist anhand des Pfeiles P dargestellt. Diese chemischen Produkte werden im weiteren Prozess nicht weiter beschrieben.

In der Kühlkolonne 13 befindet sich nun Kühlmittel, welches mit Partikeln einer erhitzten Erdölfraktion verunreinigt ist. Zur Aufreinigung dieses verunreinigten Kühlmittels schließt sich einer Primärreinigung mit einem Primärabscheider 11 eine Sekundärreinigung mittels des Sekundärabscheiders 10.1 an.

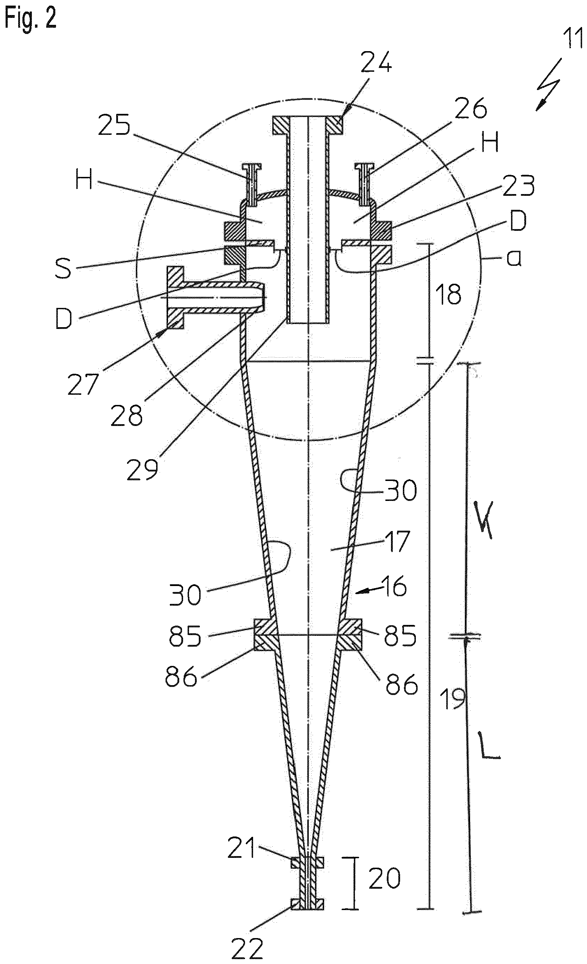

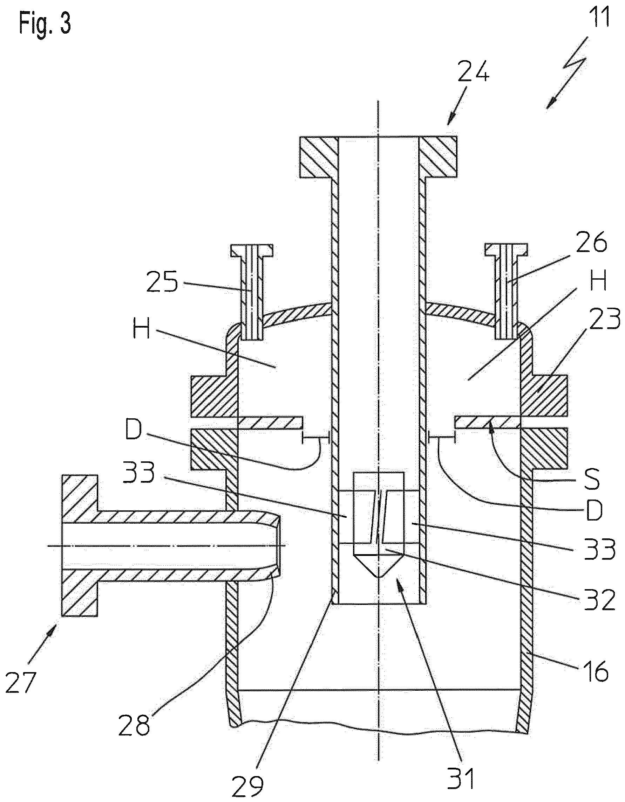

Das verunreinigte Kühlmittel wird zunächst von der Kühlkolonne 13 in Pfeilrichtung V in den Primärabscheider 11 eingeleitet. Auf den detaillierten Aufbau und die Funktion des Primärabscheiders 11 wird im Späteren anhand der Figuren 2 und 3 eingegangen.

Das verunreinigte Kühlmittel wird im Primärabscheider 11 zu 98% aufgereinigt. Das bereits im Primärabscheider 11 aufgereinigte Kühlmittel wird in Richtung des Pfeiles X in die Kühlkolonne 13 zurückgeführt und dient wiederholt der Abkühlung von erhitzen Erdölfraktionen. Alternativ kann hier auch vorgesehen sein, dass das Kühlmittel zunächst in einen Wärmetauscher (nicht dargestellt) zurückgeführt wird.

Das weiterhin verunreinigte Kühlmittel wird vom Primärabscheider 11 in Richtung Pfeil W in den Sekundärabscheider 10.1 überführt.

In dem erfindungsgemäßen Sekundärabscheider 10.1 wird das verunreinigte Kühlmittel anhand von Sedimentation in gereinigtes Kühlmittel und Partikel, also Sediment, aufgetrennt. Der detaillierte Aufbau und die Funktionsweise des Sekundärabscheiders 10.1 wird im Späteren beschrieben.

Das in dem Sekundärabscheider 10.1 aufgereinigte Kühlmittel wird in Richtung des Pfeiles Y in die Kühlkolonne 13 zurückgeführt, um weitere erhitzte Erdölfraktion abzukühlen. Auch hier ist es alternativ möglich, dass das Kühlmittel zunächst in einen Wärmetauscher (nicht dargestellt) zurückgeführt wird.

Die sedimentierten Partikel werden ausgehend von dem Sekundärabscheider 10.1 mittels eines bodenseitig angeordneten, verfahrbaren Siebkorbs 14 in einen externen Behälter 15 entlassen nachdem eine Wartungssäuberung, welche im Späteren beschrieben wird, durchgeführt worden ist. Die Wartungssäuberung reinigt und trocknet die zu entfernenden Partikel.

In der Figur 2 ist der Primärabscheider 11 dargestellt, welcher der Primärreinigung des verunreinigten Kühlmittels dient. Der Primärabscheider 11 weist einen Grundkörper 16 auf, welcher einen Innenraum 17 umgibt.

Der Grundkörper 16 ist in einen kreiszylindrischen Bereich 18 und einen konischen Bereich 19 untersteilt. Der konische Bereich 19 läuft bodenseitig in eine Auslassvorrichtung 20 aus. Anhand der Auslassvorrichtung 20 wird das verunreinigte Kühlmittel in den Sekundärabscheider 10.1 (siehe Fig. 1) überführt.

Die Auslassvorrichtung 20 weist zum konischen Bereich 19 oberseitig einen ersten Flansch 21 und in der entgegengesetzten Richtung einen zweiten Flansch 22 auf, sodass die Auslassvorrichtung 20 leicht ausgetauscht werden kann, sobald diese beispielsweise Verschleißerscheinungen aufweist.

Zudem ist der konische Endbereich 19 des Primärabscheiders 11 in einen ersten Abschnitt K und einen zweiten Abschnitt L eingeteilt. Der erste Abschnitt bildet in Richtung Auslassvorrichtung 20 einen ersten Verbindungsflansch 85 auf. Der zweite Abschnitt L hingegen bildet in Richtung des Abdeckelementes 23 einen zweiten Verbindungsflansch 86. Mittels dieser Verbindungsflansche 85 und 86 kann der konische Endbereich 19 des Primärabscheiders 11 in den ersten Abschnitt K und den zweiten Abschnitt L geteilt werden, sodass der konische Bereich 19 mittels der Lösung des Verbindungsflansches 86 vom Verbindungsflansch 85 einzeln oder der zweite Abschnitt L zusammen mit der Auslassvorrichtung 20 ausgetauscht werden kann.

Der kreiszylindrische Bereich 18 ist oberseitig mit einem Abdeckelement 23 verschlossen. Das Abdeckelement 23 umfasst einen Abdeckinnenraum H. An diesem Abdeckelement 23 ist zunächst einmal zentral ein Ausführstutzen 24 angeordnet. Der Ausführstutzen 24 geht in Richtung innenraumweisend in ein Tauchrohr 29 über, wobei dieses axial in den Innenraum 17 des kreiszylindrischen Bereich 18 des Primärabscheiders 11 ragt.

In Bezug auf die Papierebene ist benachbart des Ausführstutzens 24 auf der linken Seite ein Drucksicherheitsventil 25 und auf der rechten Seite eine Entlüftungsöffnung 26 dargestellt. Das Drucksicherheitsventil 25 ist eine Druckentlastungseinrichtung, die dann zum Einsatz kommt, sobald der maximal zulässige Betriebsdruck erreicht ist. Das Drucksicherheitsventil 25 wird geöffnet, sodass der Überdruck aus dem Primärabscheider 11 entweichen kann.

Über die Entlüftungsöffnung 26 kann Luft aus dem Innenraum 17 in die Außenumgebung abgegeben werden. Besonders wichtig ist dieser Vorgang bei der Befüllung des Primärabscheiders 11 während der Inbetriebnahme des Primärabscheiders 11 oder auch bei einer Wiederinbetriebnahme dieses, wie beispielsweise nach einer Kontrollprüfung.

Am kreiszylindrischen Bereich 18 des Primärabscheiders 11 ist ein Eintrittsstutzen 27 angeordnet, über welchen das verunreinigte Kühlmittel in den Innenraum 17 des Primärabscheiders 11 eingeführt wird. Der Endbereich 28 des Eintrittsstutzen 27 ist trichterförmig ausgebildet, sodass das verunreinigte Kühlmittel tangential in den Innenraum 17 des Grundkörpers 18 eingeleitet wird. Um beim Einlass des verunreinigten Kühlmittels Verwirbelungen innerhalb des Abdeckinnenraumes H zu verhindert, ist im kreiszylindrischen Bereich 18 oberhalb des Eintrittsstutzens 27 eine Scheibe S eingefügt. Um einen Druckausgleich zwischen dem Abdeckinnenraum H und dem Innenraum 17 zu gewährleisten, muss zwischen der Scheibe S und dem Tauchrohr 29 ein Spalt D verbleiben. Der Druckausgleich ist insbesondere beim Befüllen des Primärabscheiders 11 notwendig. Zudem ist der Spalt D für die Funktion des Drucksicherheitsventils 25 zwingend erforderlich.

Das verunreinigte Kühlmittel wird nun über den Endbereich 28 des Eintrittsstutzen 27 tangential in den Innenraum 17 eingefüllt, sodass das Kühlmittel in eine bogenförmige Kreisbahn geleitet wird und in einen abwärts gerichteten Flüssigkeitswirbel nach unten entlang des konischen Bereiches 19 gezwungen wird.

Aufgrund der Verjüngung des konischen Bereiches 19 in Richtung Boden des Primärabscheiders 11, kommt es zu einer Verdrängung des Kühlmittelvolumens in Richtung Innenraum 17, sodass es zu einem Aufstau des Kühlmittelvolumens im bodenseitigen konischen Bereichs 19 kommt. Infolgedessen wird ein innerer, aufwärtsgerichteter Wirbel gebildet, welcher durch das Tauchrohr 29 in den Ausführstutzen 24 geleitet wird, um den Primärabscheider 11 als gereinigtes Kühlmittel zu verlassen. Hierbei werden bereits ca. 98% des verunreinigtem Kühlmittels aufgereinigt.

Das Prinzip der Abtrennung des gereinigten Kühlmittels von dem verunreinigten Kühlmittel, welches weiterhin die Partikel der erhitzen Erdölfraktion beinhaltet, basiert auf dem Zusammenwirken von Strömungs- und Zentrifugalkräften. Die vorherrschenden Strömungskräfte basieren auf einer ersten Strömungsgeschwindigkeit, welche die Partikel der erhitzten Erdölfraktion im konischen Bereich 19 nach unten richten und das gereinigte Kühlmittel im inneren Bereich des Innenraumes 17 in Richtung des Tauchrohres 29 ausrichtet. Des Weiteren entsteht durch die Volumenverdrängung des gereinigten Kühlmittels nach innen eine radiale Strömungsgeschwindigkeit.

Zudem ist durch das tangentiale Zuführen des verunreinigten Kühlmittels in den Innenraum 17 eine tangential wirkende, strömungsgeführte kreisbogenförmigen Bewegungsbahn des Volumenstroms des Kühlmittels gegeben. Diese tangential wirkende Strömungsgeschwindigkeit ruft eine auf die Partikel der erhitzten Erdölfraktion wirkende Zentrifugalkraft hervor. Die radiale Strömungsgeschwindigkeit wirkt der Zentrifugalkraft, welche der tangentialen Strömungsgeschwindigkeit bedingt, entgegen.

Der Druckunterschied zwischen der Region des inneren Wirbels und des äußeren Wirbels ist unterschiedlich. Je höher die Druckdifferenz zwischen diesen beiden Wirbeln, desto höher ist die Auftrennungsrate zwischen gereinigtem und verunreinigtem Kühlmittel. Das verunreinigte Kühlmittel läuft entlang einer Innenwandung 30 des Innenraumes 17 in Richtung Auslassvorrichtung 20. Von dort wird das veruneinigte Kühlmittel einem Sekundärabscheider 10.1 (siehe Figur 1) zugeführt, um in einem weiteren Abscheidevorgang aufgereinigt zu werden.

Im Primärabscheider 11 ist eine Vorrichtung zur Druckbeeinflussung 31, wie es der Figur 3 zu entnehmen ist, vorgesehen. Diese Vorrichtung zur Druckbeeinflussung 31, insbesondere zur Reduzierung von Druckverlust, weist einen zapfenförmigen Körper 32 auf, an welchem Leitschaufeln 33 angeordnet sind. Diese Leitschaufeln 33 sind derart schräg am kegelförmigen Körper 32 angeformt, dass der Wirbel, welcher mit hoher Geschwindigkeit von den Leitschaufeln 33 im Tauchrohr 29 umgelenkt und durch die Leitschaufeln 33 eine gradlinige Strömung erhält. Die Wirbelgeschwindigkeit im Tauchrohr 29 wird somit reduziert.

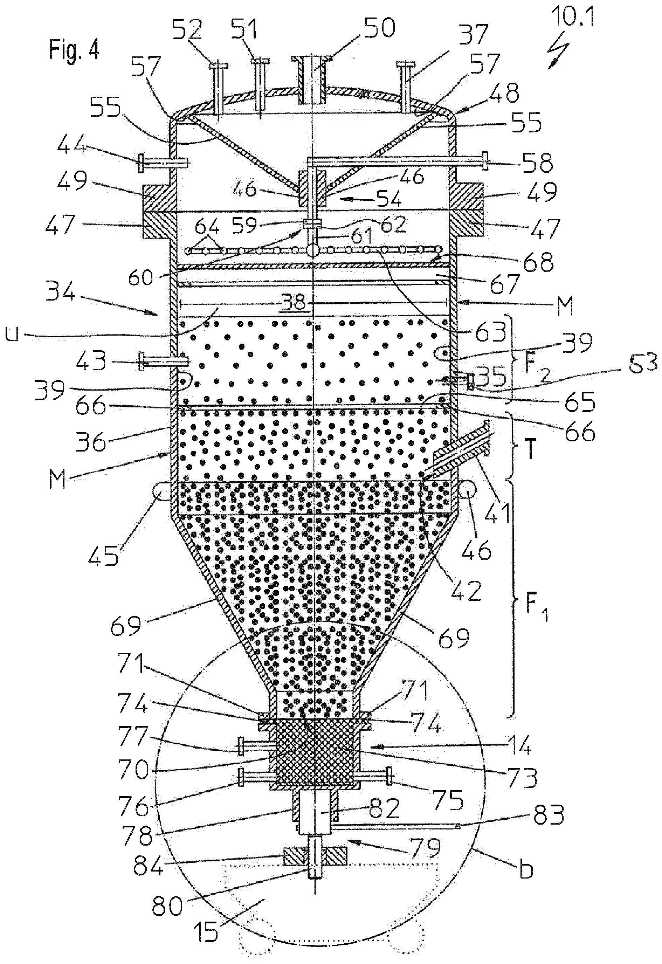

In der Figur 4 ist der erfindungsgemäße Sekundärabscheider 10.1 dargestellt, in welchen nun das verunreinigte Kühlmittel vom Primärabscheider 11 eingeleitet wird.

Der Sekundärabscheider 10.1 weist einen kreiszylindrischen Grundkörper 34 auf, welcher einen Rotationsraum 38, der eine Innenwandung 39 ausbildet, umgibt. Der Grundkörper 34 verfügt über eine vertikale Mantelfläche M. Hinsichtlich der Papierebene weist der Grundkörper 34 eine rechte Seite 35 und eine linke Seite36 aus. An der rechten Seite 35 ist ein Einlassstutzen 41 angeordnet. Dieser Einlassstutzen 41 bildet ein Austrittsbereich 42 aus, welcher in den Rotationsholraum 38 hineinragt. An der linken Seite 36 ist ein erstes Messventil 43 angeordnet, welches der Differenzdruckmessung im Sekundärabscheider 10.1 dient.

Außen an der linken Seite 36 ist zudem Sensor 45 und gegenüberliegend an der rechten Seite 35 ein Detektor 46 angeordnete, welche einer im Späteren beschriebenen radiometrischen Messung dienen.

Alternativ kann hier auch vorgesehen sein, dass im konischen Endbereich 69 ein Tauchrohr (nicht dargestellt) einsitzt, in welchem ein Sensor 45 mit dem Detektor 46 zur radiometrischen Messung der Füllstandshöhe der sedimentierten Partikel angeordnet ist.

Der Grundkörper 34 bildet oberseitig einen ersten Endflansch 47 aus, welcher den Grundköper 34 im Durchmesser überragt. Um den Grundkörper 34 zu verschließen ist diesem oberseitig ein Deckel 48 zugeordnet. Zum Grundkörper 34 weisend, bildet der Deckel 48 eine zweiten Endflansch 49 aus, welche passgenau auf dem ersten Endflansch 47 aufliegt, um den Grundkörper 34 zu verschließen.

Der Deckel 48 bildet zentral einen Auslassstutzen 50 aus, welcher der Ableitung von gereinigtem Kühlmittel aus dem Sekundärabscheider 10.1 dient.

Bezüglich der Papierebene links ist dem Auslassstutzen 50 zunächst ein erstes Reinigungsventil 51 zugeordnet. Dieses erste Reinigungsventil 51 dient der intervallweise durchzuführenden Wartungssäuberung des Sekundärabscheiders 10.1, welche im Späteren beschrieben wird.

Benachbart des ersten Reinigungsventils 51 ist ein Lüftungsventil 52 angeordnet, welches der Belüftung während der Inbetriebnahme des Sekundärabscheider 10.1 dient. Seitlich des Deckels 48 ist ein zweites Messventil 44 angeordnet, welches zur Differenzdruckmessung mit dem ersten Messventil 43 zusammenwirkt.

Im Mantel M, unterhalb des Filters 67 und oberhalb von Abscheideblech 65, ist ein Drucksicherungsventil 53 angeordnet. Sollte der Druck im Sekundärabscheider 10.1 derart ansteigen, dass der maximale Betriebsdruck überschritten wird, öffnet sich das Drucksicherheitsventil 53, um den Überdruck abzulassen.

Hinsichtlich der Papierebene ist rechts vom Auslassstutzen 50 ein Druckventil 37 angeordnet, welches der kontinuierlichen Messung des Drucks im Rotationshohlraum 38 des Grundkörpers 34 dient.

Innenseitig ist dem Deckel 48 eine Rückführeinheit 54 zugeordnet. Diese Rückführeinheit 54 ist mittels Stegen 55 im Deckel 48 fest verankert. Die Stege 55 sind umfangsnah im Deckel 48 befestigt und gehen mit dem jeweiligen freien Endbereich in etwa mittig des Rotationshohlraums 38 in eine Aufnahme 46 über.

In einer Wandung 57 des Deckels 48 ist ein Zulauf 58 eingelassen, welcher sich zunächst horizontal in den Rotationshohlraum 38 erstreckt und dann in etwa mittig des Rotationshohlraums 38 in einem 90° Winkel abknickt und die Aufnahme 46 passiert. Am freien Ende ist der Zulauf 58 mit einem ersten Befestigungsflansch 59 versehen.

Dem Befestigungsflansch 59 ist in den Rotationshohlraum 38 weisend ein Verteiler 60 zugordnet. Dieser Verteiler 60 umfasst einen senkrechten Schenkel 61 und einen waagerechten Schenkel 63. Der senkrechte Schenkel 61 des Verteilers 60 weist in Richtung Deckel 48 weisend einen zweiten Befestigungsflansch 62 auf, welcher an dem ersten Befestigungsflansch 59 festgelegt ist, um Zulauf 58 und Verteiler 60 aneinander anzuordnen.

An dem von dem senkrechten Schenkel 61 abgewandten Ende ist der waagerechte Schenkel 63 ausgebildet. Dieser umfasst Auslasse 64 mit Öffnungen, dessen Öffnungsweite in diesem Ausführungsbeispiel wenigstens 0,5 mm beträgt.

In dem vom Grundkörper 34 umgebenen Rotationshohlraum 38 ist oberhalb des Einlassstutzen 41 ein ringförmiges Abscheideblech 65 angeordnet. Dieses ist mittels eines Befestigungsvorsprungs 66, welcher beispielsweise als Achsstummel, Zapfen, oder, wie in diesem Ausführungsbeispiel als Auflagering ausgebildet sein kann, am Grundkörper 34 festgelegt,

Zwischen dem Verteiler 60 und dem Abscheideblech 65 ist ein Filter 67 angeordnet. Der Filter 67 besteht in Richtung des Verteilers 60 aus einer Keildrahtplatte 68 mit einer Maschenweite von 0,5 mm. Dieser Filter 67 wird lediglich für die intervallweise durchzuführende Wartungssäuberung benötigt, um als Partikelbarriere zu dienen. Die Wartungssäuberung wird im Späteren beschrieben.

Der Grundkörper 34 läuft bodenseitig in einen konischen Endbereich 69 aus. Der konische Endbereich ist bodenseitig mit einer Entnahmeöffnung 70 versehen. Die Entnahmeöffnung 70 bildet eine Austrittsflansch 71 aus.

Dem Sekundärabscheider 10.1 ist bodenseitig ein verfahrbarer Siebkorb 14 zugeordnet. Der Siebkorb 14 umgibt ein Sieb 73, welches über den Siebkorb 14 hinausragt und eine Kragen 74 ausbildet. Dieser Kragen 74 liegt am Austrittflansch 71 der Entnahmeöffnung 70 des Sekundärabscheiders 10.1 an.

An dem Siebkorb 14 ist hinsichtlich der Papierebene links ein Ablaufstutzen 77 angeordnet, mittels dessen jederzeit Kühlmittel aus dem Sekundärabscheider 10.1 abgelassen werden kann.

Bezüglich der Papierebene rechts ist ein Druckausgleichsventil 75 angeordnet, welches vor der Entleerung des Sekundärabscheiders 10.1 geöffnet wird.

Hinsichtlich der Papierebene links ist ein zweites Reinigungsventil 76 am Siebkorb 14 angeordnet, welches bei der Wartungssäuberung benötigt wird.

Der Siebkorb 14 bildet unterseitig eine Eingriffshülse 78 zur Aufnahme eines Halteblocks 82 einer Entleerungshilfe 79 aus.

An dem Behälter 15, welcher dem Sekundärabscheiders 10.1 unterseitig zugeordnet ist, ist eine Entleerungshilfe 79 angeordnet. Diese Entleerungshilfe 79 umfasst eine Spindel 80, welche in einen am Behälter 15 angeordneten Gewindeblock 84 eingreift. Am freien Ende bildet die Entleerungshilfe 79 den Halteblock 82 aus. Diesem Halteblock 82 entspringt eine Stange 83 mittels dessen die Entleerungshilfe 79 verfahren werden kann.

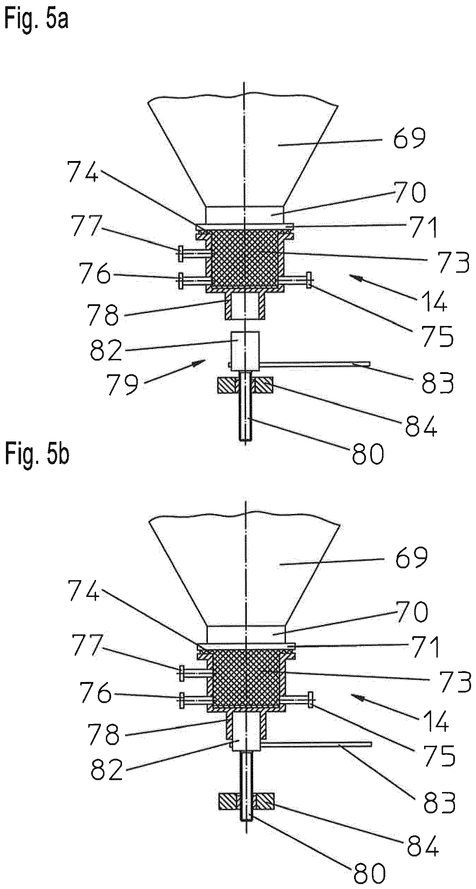

Das Zusammenwirken von Siebkorb 14 und Entleerungshilfe 79 ist den Figuren 5a bis 5c zu entnehmen.

Im Folgenden wird nun die Funktionsweise des erfindungsgemäßen Sekundärabscheiders beschrieben.

Das aus dem Primärabscheider 11 entlassende verunreinigte Kühlmittel wird mittels Einlassstutzens 41 über den Austrittsbereich 42 in den Rotationshohlraum 38 des Grundkörpers 34 des Sekundärabscheiders 10.1 eingefüllt. Der Austrittsbereich 42 ist derart im Rotationshohlraum 38 angeordnet, dass der Volumenstrom des verunreinigten Kühlmittels tangential an einer Innenwandung 39 des Grundkörpers 34 geführt wird, sodass der Volumenstrom des verunreinigten Kühlmittels in eine kreisbogenförmige Bewegungsbahn radial einer Innenumfangsfläche U des kreiszylindrischen Grundkörpers 34 gelenkt wird.

Ein Vermischen von bereits gereinigtem Kühlmittel einer vorhergehenden Aufreinigung unterbleibt, da das neu eingefüllte Kühlmittel beim Einleiten in den Rotationshohlraum 38 lediglich gegen das Abscheideblech 65 laufen kann und somit nicht mit gereinigtem Kühlmittel in Kontakt kommt.

Die Partikel der erhitzen Erdölfraktion sedimentieren nun in Richtung des konischen Endbereichs 69. Dabei ist die Dichte der Partikel gegenüber der Dichte des Kühlmittels größer, sodass die Sinkgeschwindigkeit der Partikel größer ist, als die der Sedimentationsrichtung entgegen gerichtete Strömungsgeschwindigkeit des gereinigten Kühlmittels, sodass im Sekundärabscheider 10.1 eine erste Fraktion F1 mit Partikel und eine zweite Fraktion F2 mit gereinigtem Kühlmittel entsteht.

Zwischen diesen beiden Fraktionen F1 und F2 existiert eine Trennschicht T, in welcher sich das noch zu trennende verunreinigte Kühlmittel befindet.

Um eine Vermischung des neu eingelassenen Kühlmittels mit der Trennschicht T zu vermeiden, ist oberhalb des Einlassstutzens 41 das ringförmige Abscheideblech 65 angeordnet. Dieses verhindert, dass das verunreinigte, neu eingefüllte Kühlmittel Querströme oder Verwirbelungen auslöst, welche zur Durchmischung der Trennschicht T mit den beiden Fraktionen F1 und F2 und des neu eingefüllten Kühlmittels führen würden.

Die zweite Fraktion F2, welche das gereinigte Kühlmittel beinhaltet, verlässt den Sekundärabscheider mittels des Auslassstutzens 50. Dieses gereinigte Kühlmittel wird in die Kühlkolonne 13 (siehe Figur 1) zurückgeführt und dient der Abkühlung der Erdölfraktion. Alternativ kann das gereinigte Kühlmittel auch zunächst in eine Wärmekolonne (nicht dargestellt) überführt werden., welche mit der Kühlkolonne 12 in Verbindung steht.

Die erste Fraktion F1 hingegen, welche in dieser Ausführungsform Partikel mit einer Partikelgröße ≥ 0,5 mm enthält, sedimentieren nun in Richtung der Entnahmeöffnung 70 des konischen Endbereiches 69 des Sekundärabscheiders 10.1.

Der Sensor 45 und der Detektor 46, welche an den jeweiligen Mantelflächen 35 und 36 oder gegebenenfalls auch am konischen Endberiech 69 des Grundkörpers 34 außenseitig angeordnet sind, dienen der radiometrischen Messung anhand derer die Füllstandhöhe der Partikel in konischen Endbereich 69 bestimmt werden sollen. Bei der radiometrischen Messung zur Füllstandserfassung werden Gammastrahlen vom Sensor 45 zu dem gegenüberliegenden Detektor gesandt. Dabei müssen der Sensor 45 und der Detektor 46 bereits auf einer vordefinierten Füllstandsgrenze angeordnet sein. Es ist möglich mehrere Füllstandsgrenzen zu definieren.

Bei der radiometrischen Messung passieren die Gammastrahlen die sedimentierten Partikel, sodass die Gammastrahlen beim Durchdringen dieser abgeschwächt werden. Der Detektor 46 wandelt die empfangene Strahlungsintensität nun in ein Signal um, sodass die Füllstandsgrenze detektiert werden kann. Hierbei ist es besonders vorteilhaft, dass beispielsweise bei Erreichen einer vordefinierten Füllstandsgrenzen ein Füllstandshöhenalarm (nicht dargestellt) ausgelöst wird, sodass der Anlagenbetreiber erkennt, dass die Füllstandsgrenze erreicht worden ist.

Wird die maximale Füllstandhöhe der Partikel erreicht und der Füllstandhöhenalarm ausgelöst, wird zunächst der Einlassstutzen 41 und anschließend der Auslassstutzen 50 geschlossen, sodass kein neues, verunreinigtes Kühlmittel in den Rotationshohlraum 38 eingefüllt werden kann. Dann erfolgt die im Späteren beschriebene Wartungssäuberung. Während dieser Wartungssäuberung kann der Sekundärabscheider 10.2 (siehe Figur 1) für den Aufreinigungsprozess des neuen verunreinigten Kühlmittels genutzt werden.

Anschließend wird die Entleerungshilfe 79 anhand der Stange 83 in Richtung Behälter 15 verfahren, sodass der angeordnete Siebkorb 14 von der Entnahmeöffnung 70 beabstandet und diese somit freigegeben wird. Das Sediment kann nun in den Behälter 15 abgeleitet werden.

Im ersten Schritt der Wartungssäuberung wird nun über das erste Reinigungsventil 51 ein prozessverfügbares Gas, beispielsweise ein Brenngas, in den Rotationshohlraum 38 eingeleitet. Das Gas drückt das verbliebene Kühlmittel in Richtung Siebkorb 14, sodass das Kühlmittel anschließend über das zweite Reinigungsventil 76 vollständig abgelassen werden kann.

In einem zweiten Schritt wird nun Reinigungsbenzin mittels des zweiten Reinigungsventils 76 in den Rotationshohlraum 38 eingefüllt, um weitere verbliebende Kühlmittelrückstände aufzunehmen. Die in dem Reinigungsbenzin aufgenommen Kühlmittelrückstände werden in Richtung Deckel 48 nun aus dem Reinigungsstutzen 51 entfernt. Dabei passiert das Reinigungsbenzin mit den Kühlmittelrückständen zunächst den Siebkorb 14 und anschließend den Filter 67. Dieser weist eine derart kleine Maschengröße auf, dass lediglich Partikel und Kühlmittelrückstände ≤ 0,5 mm diesen durchlaufen können. Größere Rückstände verbleiben unterhalb des Filters 67 und werden erst in einem späteren Schritt aus dem Rotationshohlraum 38 entlassen. Dabei ist der Volumenstrom des Reinigungsbenzins ≤ dem Volumenstrom des verunreinigten Kühlmittels, sodass die abgeschiedenen Partikel nicht wieder aufgewirbelt werden.

Das Reinigungsbenzin, welches nur noch Rückstände mit einer Größe von ≤ 0,5mm beinhaltet, wird über den Reinigungsstutzen 51 aus dem Sekundärabscheider 10.1 entfernt. Diesem zweiten Säuberungsschritt schließt sich ein dritter Säuberungsschritt an, welcher dem ersten Schritt entspricht.

Im vierten Säuberungsschritt wird anhand des ersten Reinigungsventils 51 Heißdampf in den Rotationshohlkörper 38 eingelassen, um restlichen Kohlenwasserstoffrückstände in dem Sekundärabscheider 10.1 zu lösen bzw. zu verdampfen und anschließend zusammen mit dem Heißdampf über das zweite Reinigungsventil 76 abzulassen.

Um die Partikel in dem Rotationshohlraum 38 nun wieder abzukühlen, wird im fünften Säuberungsschritt mittels des ersten Reinigungsventils 51 Stickstoff in den Sekundärabscheider 10.1 eingefüllt und über das zweite Reinigungsventil 76 wieder abgeführt. Sobald der Sekundärabscheider 10.1 bzw. die Partikel abgekühlt sind, die Temperaturmessung zur Kontrolle in der vom Reinigungsventil 76 abführenden Leitung ist nicht dargestellt, können die Partikel aus dem Sekundärabscheider 10.1 entfernt werden.

Sollten aufgrund einer zu hohen Viskosität des Kühlmittels keine Dichteunterschiede zwischen Kühlmittel und Partikeln mehr bestehen kann keine zufriedenstellende Sedimentation, und somit keine Aufreinigung des verunreinigten Kühlmittels stattfinden. Lediglich größere Partikel deren Sinkgeschwindigkeit aufgrund ihres höheren Gewichts auch in dem viskosen Kühlmittel noch höher ist, als die entgegengesetzte Strömungsgeschwindigkeit, können weiterhin sedimentieren. Partikel deren Sinkgeschwindigkeit nicht mehr gegeben ist, werden an den Filter 67 geschwemmt und sedimentieren nicht mehr.

Diesem Problem kann Abhilfe geschaffen werden, indem zunächst der Einlassstutzen 41 geschlossen wird, sodass kein neues, verunreinigtes Kühlmittel eingefüllt werden kann. Zudem wird der Auslassstutzen 50 geschlossen. Das verunreinigte hochviskose Kühlmittel kann den Rotationshohlraum 38 des Sekundärabscheider 10.1 nicht mehr verlassen.

Anschließend wird der Ablaufstutzen 77 geöffnet, sodass das hochviskose Kühlmittel abgeleitet werden kann. Im Rotationshohlraum 38 entsteht nun eine Strömung, welche der ursprünglichen Strömungsgeschwindigkeit entgegen gerichtet ist, sodass die am Filter 67 angeschwemmten Partikel wieder gelöst und von diesem in Richtung konischen Bereich 69 entfernt werden. Nachdem das hochviskose Kühlmittel abgelassen worden ist, werden sowohl der Einlasstutzen 41 als auch der Auslassstutzen 50 wieder geöffnet, um neues Kühlmittel in den Sekundärabscheider 10.1 einfüllen zu können.

Andererseits kann über den Zulauf 58 der Rückführeinheit 54 gereinigtes Kühlmittel oder anderes prozessgeeignetes Fluid n den Rotationshohlraum 38 eingelassen werden, um das viskose verunreinigte Kühlmittel derart zu verflüssigen, dass die Sedimentation wieder gewährleistet ist. Hier wird zunächst auch sowohl der Einlassstutzen 41 als auch der Auslassstutzen 50 geschlossen, sodass weder Kühlmittel ein- noch ablaufen kann. Über den Zulauf 58 wird nun gereinigtes Kühlmittel oder prozessgeeignetes Fluid über die Öffnungen 64 des Verteilers 60 in den Rotationsholraum 38 eingefüllt. Das viskose verunreinigte Kühlmittel wird nun verflüssig bis eine Viskosität erreicht wird, welche eine Sedimentation wieder ermöglicht. Gleichzeitig wird durch die Rückführung des gereinigten Kühlmittels in den Rotationshohlraum 38 der Filter 67 von angeschwemmten Partikeln befreit. Denn durch die hohe Viskosität können sich auch Partikel ≥0.5 mm an dem Filter 67 absetzen, deren Eigengewicht nicht ausreicht, um der entgegen gerichteten Strömungsgeschwindigkeit entgegenzuwirken. Da nun aber gereinigtes Kühlmittel bzw. prozesseigenes Fluid in den Rotationshohlraum 38 eingeleitet worden ist, muss zum Volumenausgleich überschüssiges Kühlmittel auch wieder abgeleitet werden. Dazu wird nun der Ablaufstutzen 77 geöffnet und das Kühlmittel aus dem Sekundärabscheider entfernt.

In den Figuren 5a bis 5c ist der Funktionsablauf zwischen des Siebkorbs 14 und der Entleerungshilfe 79 beschrieben.

In der Figur 5a ist die Entleerungshilfe 79 von dem Siebkorb 14 beabstandet dargestellt, sodass die Eingriffshülse 78 des Siebkorbs 14 frei liegt. Die Entleerungshilft 79 greift maximal in dem Gewindeblock 84 ein. Der Kragen 74 des Siebes 73 liegt an dem Austrittsflansch 71 der Entnahmeöffnung 70 direkt an, sodass die Entnahmeöffnung 70 nicht freigegeben ist. Das Sediment kann nicht aus dem konischen Endbereich 69 des Sekundärabscheiders 10.1 abgelassen werden.

In der Figur 5b liegt der Kragen 74 der Siebes 73 weiterhin an dem Austrittsflansch 71 der Entnahmeöffnung 70 an. Die Entleerungshilfe 79 ist minimal in dem Gewindeblock 84 verfahren. Der Halteblock 82 des Entleerungshilfe 79 liegt nun in der Eingriffshülse 78 des Siebkorbs 14 ein, sodass der Siebkorb 14 nun in Richtung des nicht dargestellten Behälter 15 anhand einer Drehbewegung der Stange 83 verfahren werden kann.

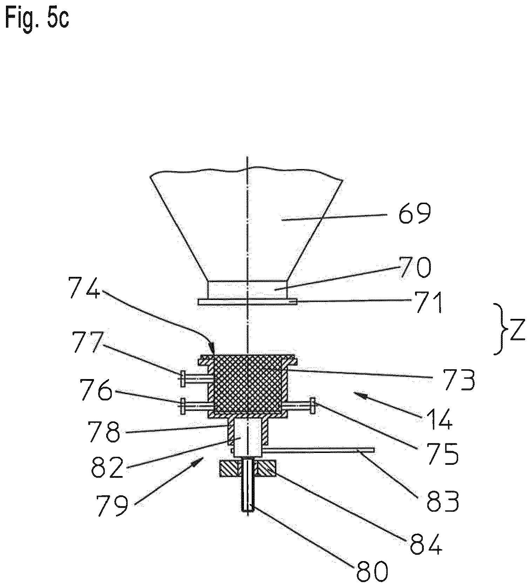

In der Fig. 5c ist die Entleerungshilfe 79 nun wieder maximal in den Gewindeblock 84 verfahren. Der Austrittsflansch 71 und der Kragen 74 des Siebes 73 des Siebkorbs 14 haben sich voneinander gelöst, sodass sich zwischen dem Siebkorb 14 und Entnahmeöffnung 70 nun ein Zwischenraum Z gebildet hat. Die Entnahmeöffnung 70 liegt somit frei, sodass das gereinigte und getrocknete Sediment nun aus dem konischen Endbereich 69 entlassen werden kann und diesen Bereich somit für weiteres Sediment freigibt.

Es ist auch vorstellbar, dass für das Aufreinigungsverfahren mehr als ein Primärabscheider und auch mehr als zwei Sekundärabscheider eingesetzt werden.

Offenbart ist zudem
A. Primärabscheider 11 in Form eines Hydrozyklons zur Aufreinigung eines mit Partikeln einer erhitzen Erdölfraktion verunreinigten Kühlmittels, insbesondere einem Quenchfluid,
   - mit einem Grundkörper 16, welcher einen kreiszylindrischen Bereich 18 und einen konischen Bereich 19 aufweist, wobei an einer vertikalen Mantelwand des kreiszylindrischen Grundkörperbereichs 16 ein Einführstutzen 27 und an einer Grundkörperoberseite zentral ein Ausführstutzen 24 angeordnet ist,
   - mit dem Ausführstutzen 24, welcher in ein Tauchrohr 29 übergeht, wobei das Tauchrohr 29 axial in den Innenraum des kreiszylindrischen Bereichs 18 des Grundkörpers 16 hineinragt,
      dadurch gekennzeichnet, dass der konische Bereich 19 im Verhältnis zum kreiszylindrische Bereich 18 länger ausgebildet ist.
B. Primärabscheider 11 nach Gegenstand A, dadurch gekennzeichnet, dass in dem Tauchrohr 29 eine Vorrichtung zur Druckbeeinflussung 31, insbesondere zur Reduzierung eines Druckverlustes, einsitzt.
C. Primärabscheider 11 nach Gegenstand B, dadurch gekennzeichnet, dass die Vorrichtung zur Druckbeeinflussung 31 statische Leitschaufeln 33 ausbildet.
D. Primärabscheider 11 nach Gegenstand A, dadurch gekennzeichnet, dass der konische Bereich 19 in ersten Abschnitt K und einen zweiten Abschnitt L teilbar ist, wobei der zweite Abschnitt L bodenseitig in einer austauschbaren Auslassvorrichtung 20, übergeht.
E. Primärabscheider 11 nach einem der vorhergehenden Gegenstände, dadurch ausgezeichnet, dass der Hydrozyklon verschleißhemdfrei ausgebildet ist.
G. Verwendung eines Primärabscheiders 11 gemäß Gegenstand A bis F zur Aufreinigung eines mit Partikeln einer erhitzen Erdölfraktion verunreinigten Kühlmittels, wie beispielsweise Quenchfluid.

Weiterhin offenbart ist ein Primärabscheider in Form eines Hydrozyklons zur Aufreinigung eines mit Partikeln einer erhitzten Erdölfraktion verunreinigten Kühlmittels, insbesondere einem Quenchfluid, mit einem Grundkörper, welcher einen kreiszylindrischen Bereich und einen konischen Bereich aufweist, wobei an einer vertikalen Mantelwand des kreiszylindrischen Grundkörperbereichs ein Einführstutzen und an einer Grundkörperoberseite zentral ein Ausführstutzen angeordnet ist, welcher in ein Tauchrohr übergeht, wobei das Tauchrohr axial in den Innenraum des kreiszylindrischen Bereichs des Grundkörpers hineinragt.

Zudem offenbart ist eine Verwendung eines Primärabscheiders zur Aufreinigung eines mit Partikeln einer erhitzten Erdölfraktion verunreinigten Kühlmittels, wie beispielsweise Quenchfluid.

Der wesentliche Vorteil des Primärabscheiders liegt darin, durch die Verlängerung des konischen Endbereiches die Abscheideleistung hierbei erhöht ist, da die Verweilzeit des verunreinigten Kühlmittels im Primärabscheider aufgrund der Vergrößerung der Anlagefläche erhöht ist. Durch eine längere Verweilzeit kann eine effektive Abscheidung der Partikel von dem Kühlmittel erreicht werden, sodass die Aufreinigung insgesamt auch effizienter ist.

Beim Einsatz eines Primärabscheiders werden bereits 98% des verunreinigten Kühlmittels aufgereinigt, lediglich 2% des verunreinigten Kühlmittels werden in den Sekundärabscheider überführt.

Zudem ist es vorteilhaft, dass im Tauchrohr eine Vorrichtung zur Druckbeeinflussung, insbesondere zur Vermeidung eines Druckverlustes, einsitzt.

Es ist vorgesehen, dass die Vorrichtung zur Druckbeeinflussung statische Leitschaufeln ausbildet. Diese dienen zur Reduzierung des Druckverlustes. Die Leitschaufeln sind individuell an die Strömungsverhältnisse des jeweiligen Hydrozyklons angepasst und reduzieren aufgrund der spezifischen Formgebung die Wirbelgeschwindigkeit im Tauchrohr und somit auch den Druckverlust um bis zu 25%. Als Folge des verringerten Druckverlustes wird weniger regulierende Pumpenleistung benötigt, um den Druck im Primärabscheider konstant zu halten. Die Lebensdauer der jeweiligen Pumpen ist somit optimiert, sodass die Pumpen seltener gewartet oder ausgetauscht werden müssen.

Es ist zudem vorgesehen, dass der konische Endbereich bodenseitig in einer austauschbaren Auslassvorrichtung ausläuft. Auf diese Auslassvorrichtung wirken die größten Kräfte, sodass dieser Bereich verschleißanfälliger ist. Die Auslassvorrichtung ist über eine Flanschverbindung mit dem konischen Endbereich verbunden, sodass die Auslassvorrichtung jederzeit leicht ausgetauscht werden kann.

Weiterhin ist es vorgesehen, dass der Hydrozyklon verschleißhemdfrei ausgebildet ist. Der Hydrozyklon ist insgesamt aus einem stärkeren Material, wie verstärktem Edelstahl, hergestellt. Die Langlebigkeit des Hydrozyklons wird somit gewährleistet und die Kosten der Instandhaltung des Hydrozyklons reduziert.
10.1 in Betrieb befindlicher Sekundärabscheider
10.2 Sekundärabscheider zum Austausch
11. Primärabscheider
12. Kühleinheit
13. Kühlkolonne
14. Siebkorb
15. Behälter
16. Grundkörper von 11
17. Innenraum
18. kreiszylindrischer Bereich
19. konischer Bereich von 16
20. Auslassvorrichtung
21. erster Flansch
22. zweiter Flansch
23. Abdeckelement
24. Ausführstutzen
25. Drucksicherheitsventil
26. Entlüftungsöffnung
27. Einführstutzen
28. Endbereich von 27
29. Tauchrohr
30. Innenwandung von 17
31. Vorrichtung zur Druckbeeinflussung
32. zapfenförmiger Körper
33. Leitschaufel
34. Grundkörper von 10.1 / 10.2
35. rechte Seite von 34
36. linke Seite von 34
37. Druckventil
38. Rotationshohlraum
39. Innenwandung von 38
41. Einlassstutzen
42. Austrittbereich
43. erstes Messventil
44. zweites Messventil
45. Sensor
46. Detektor
47. erster Endflansch
48. Deckel
49. zweiter Endflansch
50. Auslassstutzen
51. erstes Reinigungsventil
52. Lüftungsventil
53. Drucksicherungsventil
54. Rückführeinheit
55. Steg
56. Aufnahme
57. Wandung von 48
58. Zulauf
59. erster Befestigungsflansch
60. Verteiler
61. senkrechter Schenkel von 60
62. zweiter Befestigungsflansch
63. waagerechter Schenkel von 60
64. Auslass 60
65. Abscheideblech
66. Befestigungsvorsprung
67. Filter
68. Keildrahtplatte
69. konischer Endbereich von 34
70. Entnahmeöffnung
71. Austrittsflansch
73. Sieb
74. Kragen
75. Druckausgleichsventil
76. zweites Reinigungsventil
77. Ablaufstutzen
78. Eingriffshülse
79. Entleerungshilfe
80. Spindel
82. Halteblock
83. Stange
84. Gewindeblock
85. erster Verbindungsflansch
86. zweiter Verbindungsflansch
D = Spalt
F1 = erste Fraktion
F2 = zweite Fraktion
H = Abdeckinnenraum
K = ersten Abschnitt von 19
L = zweiter Abschnitt von 19
M = vertikale Mantelfläche
P = Pfeil
T = Trennschicht
U = Innenumfangsfläche von 34
V = Richtungspfeil
W = Richtungspfeil
X = Richtungspfeil
Y = Richtungspfeil
Z = Zwischenraum

## Patentansprüche

1. Sekundärabscheider (10.1/10.2) zur Aufreinigung eines mit Partikeln einer erhitzen Erdölfraktion verunreinigten Kühlmittels, wie beispielsweise Quenchfluid,
- mit einem kreiszylindrischen Grundkörper (34), welcher oberseitig geschlossen ist und nach unten in einem konischen Endbereich (69) ausläuft, wobei der konische Endbereich (69) eine verschließbare Entnahmeöffnung (70) aufweist und der Grundkörper (34) einen zylindrischen Rotationshohlraum (38) umgibt,
- mit einem Einlassstutzen (41), welcher am Grundkörper (34) angeordnet ist, um verunreinigtes Kühlmittel in den Rotationshohlraum (38) einzuleiten,
- mit einem Auslassstutzen (50), welcher am Grundkörper (34) angeordnet ist, um das gereinigte Kühlmittel abzuleiten,
- wobei der Austrittbereich (42) des Einlassstutzens (41) das verunreinigte Kühlmittel tangential an die Innenwand (39) des Grundkörpers führt, um den Volumenstrom des verunreinigten Kühlmittels in eine kreisbogenförmige Bewegungsbahn radial einer Innenumfangsfläche (U) des kreiszylindrischen Grundkörpers (34) zu lenken,
- wobei der Sekundärabscheider (10.1/10.2) oberseitig mittels eines Deckels (48) verschlossen ist, wobei diesem zentral der Auslassstutzen (50) angeordnet ist, um das gereinigte Kühlmittel aus dem Sekundärabscheider (10.1/10.2) zu entlassen,
- ein Ablaufstutzen (77) im Bodenbereich des Sekundärabscheiders (10.1/10.2) ausgebildet ist, um die Viskosität zu beeinflussen, sodass insbesondere die Sedimentation aufrechterhalten wird, **dadurch gekennzeichnet, dass** an der Innenseite (57) des Deckels (48) eine Rückführeinheit (54) angeordnet ist, um im Zusammenwirken mit dem Ablaufstutzen (77), die Viskosität zu beeinflussen und den Filter (67) von den angeschwemmten Partikeln zu befreien, sodass insbesondere die Sedimentation aufrechterhalten wird.

2. Sekundärabscheider (10.1/10.2) nach Anspruch 1, **dadurch gekennzeichnet, dass** im Sekundärabscheider (10.1/10.2) mittels Sedimentation eine erste Fraktion (F1) mit Partikeln einer erhitzen Erdölfraktion und eine zweite Fraktion (F2) mit gereinigtem Kühlmitten entsteht, wobei zwischen der ersten Fraktion (F1) und der zweiten Fraktion (F2) eine Trennschicht (T) mit verunreinigtem Kühlmittel existiert.

3. Sekundärabscheider (10.1/10.2) nach Anspruch 1, **dadurch gekennzeichnet, dass** ein Filter (67) quer zur Längsachse des Grundkörpers (34) im Rotationshohlraum (38) einsitzt, um lediglich in einer intervallweise durchgeführten Wartungssäuberung als Partikelbarriere zu dienen.

4. Sekundärabscheider (10.1/10.2) nach Anspruch 1, **dadurch gekennzeichnet, dass** im Rotationshohlraum (38) ein Abscheideblech (65) einsitzt.

5. Sekundärabscheider (10.1/10.2) nach Anspruch 4, **dadurch gekennzeichnet, dass** das Abscheideblech (65) ringförmig ausgebildet ist.

6. Sekundärabscheider (10.1/10.2) nach einem der Ansprüche 2 bis 5, **dadurch gekennzeichnet, dass** das Abscheideblech (65) zwischen dem Filter (67) und dem Einlassstutzen (41) angeordnet ist, um beim Einfüllen des verunreinigten Kühlmittels eine Vermischung der im Sekundärabscheider (10.1/10.2) bereits vorhandenen zweiten Fraktion (F2) und der Trennschicht (T) zu verhindern.

7. Sekundärabscheider (10.1/10.2) nach Anspruch 1, **dadurch gekennzeichnet, dass** der Sekundärabscheider (10.1/10.2) als Einkammersystem ausgebildet ist.

8. Sekundärabscheider (10.1/10.2) nach Anspruch 1, **dadurch gekennzeichnet, dass** an der Entnahmeöffnung ein Siebkorb (14) angeordnet ist, welcher verfahrbar ausgestaltet ist, um die Partikel aus dem Sekundärabscheider (10.1/10.2) zu entfernen.

9. Sekundärabscheider (10.1/10.2) nach Anspruch 1, **dadurch gekennzeichnet, dass** an einer vertikalen Mantelfläche (M) des Grundkörpers (34) ein Sensor (45) und an der gegenüberliegenden Mantelfläche (M) des Grundkörpers (34) ein Detektor (46) angeordnet ist, um wenigstens einen Füllstandshöhe der sedimentieren Partikel innerhalb des Grundkörpers (34) radiometrisch zu bemessen.

10. Sekundärabscheider (10.1/10.2) nach Anspruch 1, **dadurch gekennzeichnet, dass** im konischen Endbereich (69) ein Tauchrohr einsitzt, in welchem ein Sensor (45) zur radiometrischen Messung der Füllstandshöhe der sedimentierten Partikel angeordnet ist.
